# EUROPEAN PATENT SPECIFICATION

(11) **EP 3 749 030 B1**
(45) Date of publication and mention of the grant of the patent: **18.06.2025**
(21) Application number: 18905873.8
(22) Date of filing: 08.02.2018
(51) Int. Cl.: H04W 72/23, H04W 72/0453

(54) **RESOURCE CONFIGURATION METHOD AND DEVICE, AND COMPUTER STORAGE MEDIUM**
RESSOURCENKONFIGURATIONSVERFAHREN UND -VORRICHTUNG SOWIE COMPUTERSPEICHERMEDIUM
PROCÉDÉ ET DISPOSITIF DE CONFIGURATION DE RESSOURCES ET SUPPORT DE STOCKAGE INFORMATIQUE

(43) Date of publication of application: 09.12.2020
(73) Proprietor: GUANGDONG OPPO MOBILE TELECOMMUNICATIONS CORP., LTD., Wusha, Chang'an Dongguan Guangdong 523860 (CN)
(72) Inventor: SHEN, Jia, Dongguan, Guangdong 523860 (CN)
(74) Representative: RGTH
(86) International application number: PCT/CN2018/075834
(87) International publication number: WO 2019/153189

(56) References cited:
- CN-A- 106 455 081
- SAMSUNG: "Wider Bandwidth Operations", vol. RAN WG1, no. Qingdao, P.R. China; 20170627 - 20170630, 26 June 2017 (2017-06-26), XP051299966, Retrieved from the Internet <URL:http://www.3gpp.org/ftp/Meetings_3GPP_SYNC/RAN1/Docs/> [retrieved on 20170626]
- HUAWEI ET AL: "On bandwidth adaptation", vol. RAN WG1, no. Qingdao, China; 20170627 - 20170630, 17 June 2017 (2017-06-17), XP051305575, Retrieved from the Internet <URL:http://www.3gpp.org/ftp/tsg_ran/WG1_RL1/TSGR1_AH/NR_AH_1706/Docs/> [retrieved on 20170617]
- HUAWEI ET AL: "Discussion on BWP inactivity timer", vol. RAN WG2, no. Vancouver, Canada; 20180122 - 20180126, 12 January 2018 (2018-01-12), XP051386067, Retrieved from the Internet <URL:http://www.3gpp.org/ftp/tsg%5Fran/WG2%5FRL2/TSGR2%5FAHs/2018%5F01%5FNR/Docs/> [retrieved on 20180112]
- OPPO: "Timer based BWP switching", vol. RAN WG2, no. Prague, Czech Republic; 20171009 - 20171013, 8 October 2017 (2017-10-08), XP051342194, Retrieved from the Internet <URL:http://www.3gpp.org/ftp/Meetings_3GPP_SYNC/RAN2/Docs/> [retrieved on 20171008]
- SAMSUNG: "Further considerations for bandwidth part", vol. RAN WG2, no. Vancouver, Canada; 20180122 - 20180126, 12 January 2018 (2018-01-12), XP051386872, Retrieved from the Internet <URL:http://www.3gpp.org/ftp/tsg%5Fran/WG2%5FRL2/TSGR2%5FAHs/2018%5F01%5FNR/Docs/> [retrieved on 20180112]
- GUANGDONG OPPO MOBILE TELECOM: "Bandwidth part configuration and frequency resource allocation", 3GPP TSG RAN WG1 NR AD-HOC #2 RL-1710164, 27 June 2017 (2017-06-27), Qingdao, P.R. China, XP051299388
- INTEL CORP.: "Overall impact in RAN2 for BWP", 3GPP TSG RAN WG2 MEETING #99 BIS R2-1710592, 9 October 2017 (2017-10-09), Prague, Czech Republic, XP051342628

## Description

### TECHNICAL FIELD

The disclosure relates to the technical field of wireless communications, and in particular to methods and devices for resource configuration, and a computer storage medium.

### BACKGROUND

In a Long Term Evolution (LTE) system, a frequency domain resource of a terminal is allocated in a whole system bandwidth. As the system bandwidth is greatly increased in a 5th Generation (5G) New Radio (NR) system, a transmission bandwidth of the terminal may take up only a part of the system bandwidth.

In current research on 5G NR, a concept of a band width part (BWP) has been determined to be introduced to implement the allocation of the frequency domain resource within a range smaller than the system bandwidth. A base station may configure a plurality of BWPs via Radio Resource Control (RRC) signaling, and then dynamically activate a BWP via DL Control Information (DCI). A BWP is based on a parameter set. The parameter set includes a subcarrier interval and a Cyclic Prefix (CP). According to current solutions, only one BWP can be activated for one terminal; and when a new BWP is activated, the previous BWP may be deactivated.

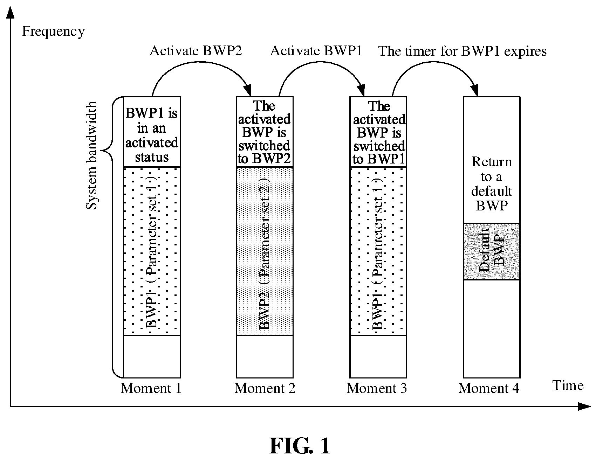

As shown in FIG. 1, when BWP1 is in an activated status, if BWP2 is activated, then the BWP1 may change to be deactivated; and when the BWP1 is deactivated, it may return to a default BWP.

According to the existing technical solutions, a plurality of BWPs cannot be activated simultaneously, that is, a plurality of parameter sets cannot be used simultaneously, and when a plurality of types of services are transmitted concurrently, parameters sets of different services cannot be optimized respectively. Moreover, switchover between two parameter sets may also lead to switchover between two BWPs and conversion of a Radio Frequency (RF) bandwidth of a terminal. Due to the conversion of the RF bandwidth, the terminal cannot receive or send data within a period of time and thus a waste of a spectrum resource may be caused.

Related technology is known from R1-1710761 titled with "Wider Bandwidth Operations", R1-1711424 titled with "On bandwidth adaptation" and R1-1710164 titled with "Bandwidth part configuration and frequency resource allocation".

### SUMMARY

In order to solve the above-mentioned technical problem, the embodiments of the disclosure provide methods and devices for resource configuration, and a computer storage medium.

A method for resource configuration is provided as set forth in claim 1.

A method for resource configuration is provided as set forth in claim 4.

A device for resource configuration is provided as set forth in claim 6.

A device for resource configuration is provided as set forth in claim 10.

A computer storage medium provided by the embodiments of the disclosure has computer executable instructions stored thereon; and the computer executable instructions may implement, when being executed by a processor, any one of the above-mentioned methods for resource configuration.

In the technical solutions of the embodiments of the disclosure, a terminal may receive first control information from a network device, the first control information including first indication information, and the first indication information being configured to determine at least two DL BWPs or the at least two UL BWPs to be activated; and the terminal may activate the at least two DL BWPs or the at least two UL BWPs according to the first control information. By adopting the technical solutions of the embodiments of the disclosure, a concept of a BWP set is introduced; by configuring the BWP set, a plurality of BWPs in the BWP set may be activated at the same time; and with the utilization of the plurality of activated BWPs to transmit a signal, simultaneous transmission for multiple types of services can be flexibly supported, and the scheduling flexibility and the spectral utilization rate of a system can be improved.

### BRIEF DESCRIPTION OF THE DRAWINGS

The accompanying drawings are described here to provide a further understanding of the disclosure, and form a part of the disclosure. The schematic embodiments and description of the disclosure are adopted to explain the disclosure, and do not form improper limits to the disclosure. In the drawings:
FIG. 1 is a schematic diagram showing that only one BWP can be in an activated status.
FIG. 2 is a first flowchart of a resource configuration method according to embodiments of the disclosure.
FIG. 3 is a second flowchart of a resource configuration method according to embodiments of the disclosure.
FIG. 4 is a schematic diagram showing that BWPs in a BWP set are deactivated simultaneously in embodiments of the disclosure.
FIG. 5 is a schematic diagram showing that BWPs in a BWP set are deactivated respectively in embodiments of the disclosure.
FIG. 6 is a schematic diagram showing that BWPs in a BWP set have same frequency domain position and bandwidth size in embodiments of the disclosure.
FIG. 7 is a schematic diagram showing that frequency domain ranges of BWP₂, ..., BWP_{N} are within a frequency domain range of BWP₁ in a BWP set in embodiments of the disclosure.
FIG. 8 is a schematic diagram showing that BWPs having same frequency domain position and bandwidth size are deactivated simultaneously in embodiments of the disclosure.
FIG. 9 is a schematic diagram showing that when timer 1 for DL BWP1 expires, the DL BWP1 and DL BWP2 within a frequency domain range of the DL BWP1 are deactivated simultaneously in embodiments of the disclosure.
FIG. 10 is a schematic diagram showing that BWP2 is deactivated earlier than BWP1 in embodiments of the disclosure.
FIG. 11 is a schematic diagram showing that BWP2 is deactivated earlier than BWP1 in embodiments of the disclosure.
FIG. 12 is a first structural diagram of a resource configuration device according to embodiments of the disclosure.
FIG. 13 is a second structural diagram of a resource configuration device according to embodiments of the disclosure.
FIG. 14 is a structural diagram of a computer device according to the disclosure.

### DETAILED DESCRIPTION

For making the characteristics and technical contents of the embodiments of the disclosure understood in more detail, implementation of the embodiments of the disclosure will be described below in combination with the drawings in detail. The drawings are only adopted for description as references and not intended to limit the embodiments of the disclosure.

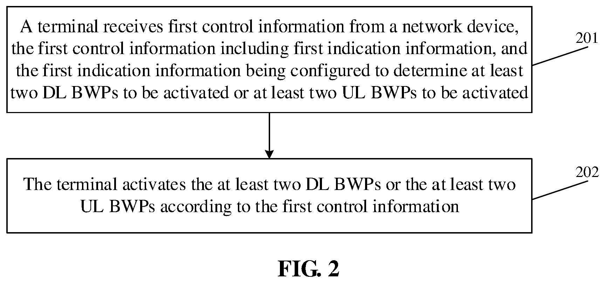

FIG. 2 is a first flowchart of a resource configuration method according to embodiments of the disclosure. As shown in FIG. 2, the resource configuration method includes the following operations.

At operation 201: a terminal receives first control information from a network device, the first control information including first indication information, and the first indication information being configured to determine at least two DL BWPs to be activated or at least two UL BWPs to be activated.

In the disclosure, the terminal may be any device capable of communicating with a network, such as a mobile phone, a tablet computer, a notebook and a desktop computer.

In the disclosure, the network device may be a base station, such as a gNB in a 5G system.

In the disclosure, the first control information may be DCI or a Media Access Control Control Element (MAC CE).

At operation 202: the terminal activates the at least two DL BWPs or the at least two UL BWPs according to the first control information.

In the embodiments of the disclosure, the terminal receives first configuration information from the network device. The first configuration information includes configuration information of at least one DL BWP set or at least one UL BWP set, the DL BWP set includes a plurality of DL BWPs, and the UL BWP set includes a plurality of UL BWPs.

Herein, the configuration information of the BWP set may include a BWP identifier (ID), a frequency domain position, a bandwidth size and a parameter set of each BWP included in the BWP set. The parameter set may include a subcarrier interval and a Cyclic Prefix (CP).

In the disclosure, the first configuration information may be RRC signaling or System Information (SI).

In the embodiments of the disclosure, the operation that the terminal activates the at least two DL BWPs or the at least two UL BWPs according to the first control information is implemented via the following manners.

Manner 1: in response to that the first indication information is indication information of a first BWP set, the terminal activates each BWP in the first BWP set. In a case that the first BWP set is the DL BWP set, each BWP in the first BWP set is the DL BWP; or in a case that the first BWP set is the UL BWP set, each BWP in the first BWP set is the UL BWP.

For example, the first configuration information may include configuration information of a first BWP set for downlink or uplink. The first BWP set may include BWP₁, ..., BWP_{N} (N≥2). Upon reception of the first control information including the indication information of the first BWP set, the terminal may activate BWP₁, ..., BWP_{N}. The BWP₁, ..., BWP_{N} may be DL activated BWPs or UL activated BWPs.

In the embodiments, the method further includes that: the terminal receives second configuration information from the network device, the second configuration information including first duration information corresponding to the first BWP set; and the terminal deactivates each BWP in the first BWP set in response to that an activated duration of each BWP in the first BWP set reaches a first duration.

For example, the terminal may receive the second configuration information from the network device. The second configuration information may include information of a timer for the first BWP set (set_timer); and after the set_timer expires, the BWP₁, ..., BWP_{N} may be deactivated.

In an implementation, the method may further include that: the terminal receives third configuration information from the network device, the third configuration information including second duration information corresponding to a first BWP in the first BWP set; and the terminal deactivates the first BWP in response to that an activated duration of the first BWP reaches a second duration.

For example, the terminal may receive the third configuration information from the network device. The third configuration information may include information of a timer for BWPᵢ(i=1, ..., N) (timerᵢ); and after the timeri expires, the BWPᵢ may be deactivated.

In an implementation, the method may further include that: in response to that each BWP in the first BWP set is deactivated, a default BWP is activated.

For example, in response to that the BWP₁, ..., BWP_{N} in the first BWP set are all deactivated, the DL activated BWP or the UL activated BWP may be changed into the default BWP.

Manner 2: in response to determining, based on the first configuration information, that each BWP in a second BWP set meets a predetermined rule and the first indication information is indication information of a second BWP in the second BWP set, the terminal activates each BWP in the second BWP set. In a case that the second BWP set is the DL BWP set, each BWP in the second BWP set is the DL BWP; or in a case that the second BWP set is the UL BWP set, each BWP in the second BWP set is the UL BWP.

For example, the first configuration information may include configuration information of the second BWP set for downlink or uplink. The second BWP set may include BWP₁, ..., BWP_{N} (N≥2). In a case that the BWP₁, ..., BWP_{N} (N≥2) in the second BWP set meet the predetermined rule, upon the reception of the first control information including the indication information of the BWP1, the terminal may activate the BWP₁, ..., BWP_{N}. The BWP₁, ..., BWP_{N} may be DL activated BWPs or UL activated BWPs.

In an implementation, the method may further include that: the terminal activates the second BWP in response to determining, based on the first configuration information, that each BWP in the second BWP set does not meet the predetermined rule and the first indication information is indication information of the second BWP in the second BWP set. In a case that the second BWP set is the DL BWP set, the second BWP is the DL BWP; or in a case that the second BWP set is the UL BWP set, the second BWP is the UL BWP.

For example, in a case that the BWP₁, ..., BWP_{N} (N≥2) in the configured second BWP set do not meet the predetermined rule, after the terminal receives the first control information including the indication information of the BWP₁, the BWP₁ may become the DL activated BWP or the UL activated BWP.

In the disclosure, each BWP in the second BWP set meets the predetermined rule, which may include at least one of the following situations.
1) Each BWP in the second BWP set is consistent in frequency domain position and bandwidth size.

For example, the BWP₁, ..., BWP_{N} may be consistent in frequency domain position and bandwidth size.

2) A frequency domain range of each BWP, other than the second BWP, in the second BWP set is within a frequency domain range of the second BWP.

For example, the frequency domain ranges of the BWP₂, ..., BWP_{N} may be within the frequency domain range of the BWP₁.

3) An RF bandwidth capacity of the terminal is capable of simultaneously covering a frequency domain range of each BWP in the second BWP set.

For example, the RF bandwidth capacity of the terminal can simultaneously cover the frequency domain ranges of the BWP₁, ..., BWP_{N}.

In an implementation, the method may further include that: the terminal receives fourth configuration information from the network device, the fourth configuration information including third duration information corresponding to the second BWP; and the terminal deactivates each BWP in the second BWP set in response to that an activated duration of the second BWP reaches a third duration.

For example, in response to that the timer for the BWP₁ (timer₁) expires, the BWP₁, ..., BWP_{N} may be deactivated.

In an implementation, the method may further include that: the terminal receives fifth configuration information from the network device, the fifth configuration information including fourth duration information corresponding to a third BWP in the second BWP set; and the terminal deactivates the third BWP in response to that an activated duration of the third BWP reaches a fourth duration, the third BWP being different from the second BWP.

For example, in response to that the timer for the BWPᵢ (i=2, ..., N) expires, the BWPᵢ may be deactivated.

In an implementation, the method may further include that: in response to that each BWP in the second BWP set is deactivated, a default BWP may be activated.

For example, in response to that the BWP₁, ..., BWP_{N} in the second BWP set are all deactivated, the DL activated BWP or the UL activated BWP may be changed into the default BWP.

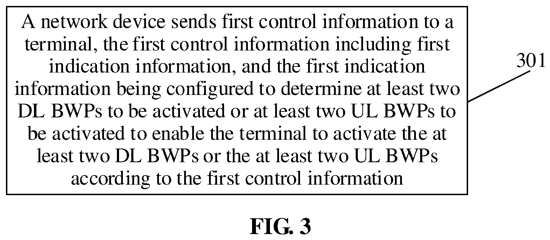

FIG. 3 is a second flowchart of a resource configuration method according to embodiments of the disclosure. As shown in FIG. 3, the resource configuration method includes the following operation.

At operation 301: a network device sends first control information to a terminal, the first control information including first indication information, and the first indication information being configured to determine at least two DL BWPs to be activated or the at least two UL BWPs to be activated, to enable the terminal to activate the at least two DL BWPs or the at least two UL BWPs according to the first control information.

In an implementation, the method further includes that: the network device sends first configuration information to the terminal, the first configuration information including configuration information of at least one DL BWP set or at least one UL BWP set, the DL BWP set including a plurality of DL BWPs, and the UL BWP set including a plurality of UL BWPs.

In the embodiments of the disclosure, the first indication information is configured to determine the at least two DL BWPs or the at least two UL BWPs to be activated, which is implemented via the following manners.

Manner 1: in response to that the first indication information is indication information of a first BWP set, the first indication information is configured to enable the terminal to activate each BWP in the first BWP set. In a case that the first BWP set is the DL BWP set, each BWP in the first BWP set is the DL BWP; or in a case that the first BWP set is the UL BWP set, each BWP in the first BWP set is the UL BWP.

In the embodiments, the method further includes that: the network device sends second configuration information to the terminal, the second configuration information including first duration information corresponding to the first BWP set. The first duration information is configured to enable, in response to that an activated duration of each BWP in the first BWP set reaches a first duration, the terminal to deactivate each BWP in the first BWP set.

In an implementation, the method may further include that: the network device sends third configuration information to the terminal, the third configuration information including second duration information corresponding to a first BWP in the first BWP set. The second duration information may be configured to enable, in response to that an activated duration of the first BWP reaches a second duration, the terminal to deactivate the first BWP.

Manner 2: in response to it is determined, based on the first configuration information, that each BWP in a second BWP set meets a predetermined rule and the first indication information is indication information of a second BWP in the second BWP set, the first indication information may be configured to enable the terminal to activate each BWP in the second BWP set. In a case that the second BWP set is the DL BWP set, each BWP in the second BWP set is the DL BWP; or in a case that the second BWP set is the UL BWP set, each BWP in the second BWP set is the UL BWP.

In an implementation, in response to it is determined, based on the first configuration information, that each BWP in the second BWP set does not meet the predetermined rule and the first indication information is indication information of the second BWP in the second BWP set, the first indication information may be configured to enable the terminal to activate the second BWP. In a case that the second BWP set is the DL BWP set, the second BWP is the DL BWP; or in a case that the second BWP set is the UL BWP set, the second BWP is the UL BWP.

In an implementation, each BWP in the second BWP set meets the predetermined rule, which may include the following situations:
each BWP in the second BWP set is consistent in frequency domain position and bandwidth size; or
a frequency domain range of each BWP, other than the second BWP, in the second BWP set is within a frequency domain range of the second BWP; or
an RF bandwidth capacity of the terminal can simultaneously cover a frequency domain range of each BWP in the second BWP set.

In an implementation, the method may further include that: the network device sends fourth configuration information to the terminal, the fourth configuration information including third duration information corresponding to the second BWP. The third duration information may be configured to enable, in response to that an activated duration of the second BWP reaches a third duration, the terminal to deactivate each BWP in the second BWP set.

In an implementation, the method may further include that: the network device sends fifth configuration information to the terminal, the fifth configuration information including fourth duration information corresponding to a third BWP in the second BWP set. The fourth duration information may be configured to enable, in response to that an activated duration of the third BWP reaches a fourth duration, the terminal to deactivate the third BWP, the third BWP being different from the second BWP.

The technical solutions of the disclosure are further described below in combination with specific application examples.

### Example 1: configuration and activation of a BWP set

As shown in Table 1 and Table 2, the first configuration information is configured with 4 DL BWP sets and 2 UL BWP sets which includes the 4 DL BWPs respectively. The DL BWP set 1 includes DL BWP 1 and DL BWP 2, and the DL BWP set 2 includes DL BWP 3 and DL BWP 4. If the first control information includes an ID of the DL BWP set 1, then the DL BWP 1 and the DL BWP 2 are activated simultaneously. If the first control information includes an ID of the DL BWP set 2, then the DL BWP 3 and the DL BWP 4 are activated simultaneously.

**Table 1: configuration of DL BWP**

| **DL BWP ID** | **Frequency** | **Bandwidth size** | **Parameter set** |
|---|---|---|---|
| | **domain position** | | |
| DL BWP 1 | Frequency domain position 1 | Bandwidth size 1 | Parameter set 1 |
| DL BWP 2 | Frequency domain position 2 | Bandwidth size 2 | Parameter set 2 |
| DL BWP 3 | Frequency domain position 3 | Bandwidth size 3 | Parameter set 3 |
| DL BWP 4 | Frequency domain position 4 | Bandwidth size 4 | Parameter set 4 |

**Table 2: configuration of DL BWP set**

| **ID of DL BWP set** | **BWP included** |
|---|---|
| DL BWP set 1 | DL BWP 1, DL BWP 2 |
| DL BWP set 2 | DL BWP 3, DL BWP 4 |

Another method for achieving the same effect is as shown in Table 3, that is, two DL BWP sets are configured, and BWPs included in each BWP set are configured.

**Table 3: configuration of DL BWP set and DL BWP**

| **ID of DL BWP set** | **DL BWP ID** | **Frequency domain position** | **Bandwidth size** | **Parameter set** |
|---|---|---|---|---|
| DL BWP set 1 | DL BWP 1 | Frequency domain position 1 | Bandwidth size 1 | Parameter set 1 |
| | DL BWP 2 | Frequency domain position 2 | Bandwidth size 2 | Parameter set 2 |
| DL BWP set 2 | DL BWP 3 | Frequency domain position 3 | Bandwidth size 3 | Parameter set 3 |
| | DL BWP 4 | Frequency domain position 4 | Bandwidth size 4 | Parameter set 4 |

It is to be understood that the configuration and activation methods of the UL BWP set is the same as those of the DL BWP set.

### Example 2: simultaneous deactivation of BWPs in a BWP set

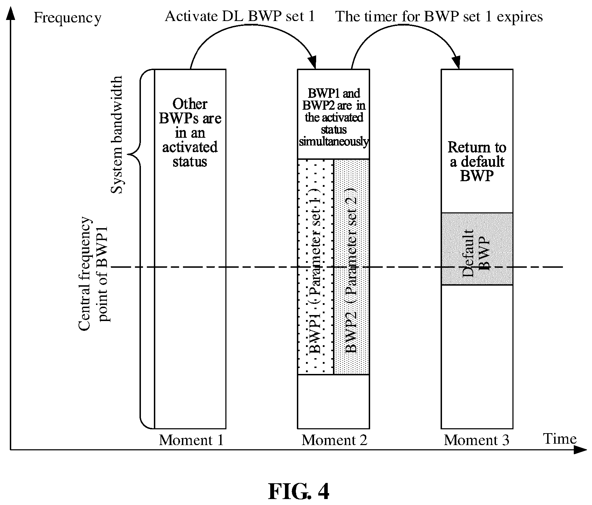

As shown in FIG. 4, when the DL BWP1 and the DL BWP2 belonging to the DL BWP set 1 are in an activated status, and when a timer for the DL BWP set 1 expires, the DL BWP1 and the DL BWP2 are deactivated simultaneously.

It is to be understood that the configuration and activation methods of the UL BWP set is the same as those of the DL BWP set.

### Example 3: respective deactivation of BWPs in a BWP set

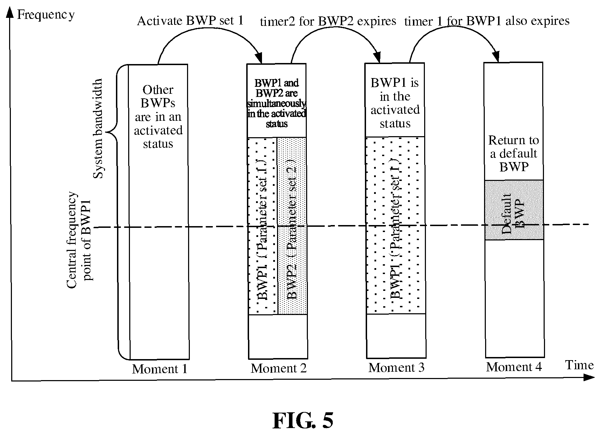

As shown in FIG. 5, when the DL BWP1 and the DL BWP2 belonging to the DL BWP set 1 are in an activated status and when a timer1 for the DL BWP2 expires, the DL BWP 2 may be deactivated; and when a timer2 for the DL BWP1 expires, the DL BWP 1 may be also deactivated.

It is to be understood that the configuration and activation methods of the UL BWP set is the same as those of the DL BWP set.

### Example 4: configuration and activation of a BWP set

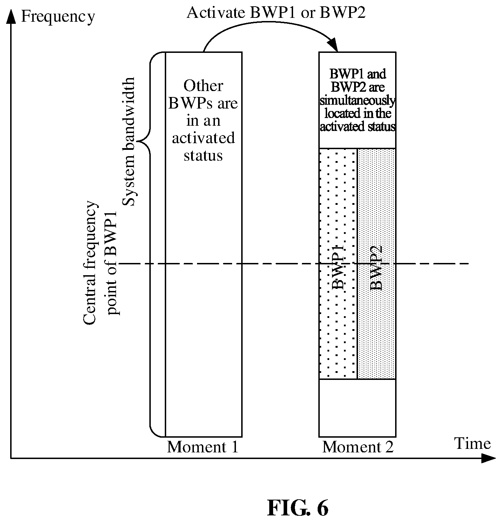

A first predetermined rule is shown in Table 4 and FIG. 6, that is, each BWP in one BWP set has the same frequency domain position and bandwidth size. The first configuration information is configured with 4 DL BWPs. The DL BWP 1 and the DL BWP 2 are consistent in frequency domain position and bandwidth size to form a DL BWP set. The DL BWP 3 and the DL BWP 4 are consistent in frequency domain position and bandwidth size to form another DL BWP set. In a case that the first control information includes an ID of the DL BWP1 or an ID of the DL BWP 2, the DL BWP 1 and the DL BWP 2 are activated simultaneously. In a case that the first control information includes an ID of the DL BWP 3 or an ID of DL BWP 4, the DL BWP 3 and the DL BWP 4 are activated simultaneously.

**Table 4: BWPs included in a BWP set are consistent in frequency domain position and bandwidth size**

| **ID of DL BWP** | **Frequency domain position** | **Bandwidth size** | **Parameter set** |
|---|---|---|---|
| DL BWP 1 | Frequency domain position 1 | Bandwidth size 1 | Parameter set 1 |
| DL BWP 2 | Frequency domain position 1 | Bandwidth size 1 | Parameter set 2 |
| DL BWP 3 | Frequency domain position 2 | Bandwidth size 2 | Parameter set 1 |
| DL BWP 4 | Frequency domain position 2 | Bandwidth size 2 | Parameter set 2 |

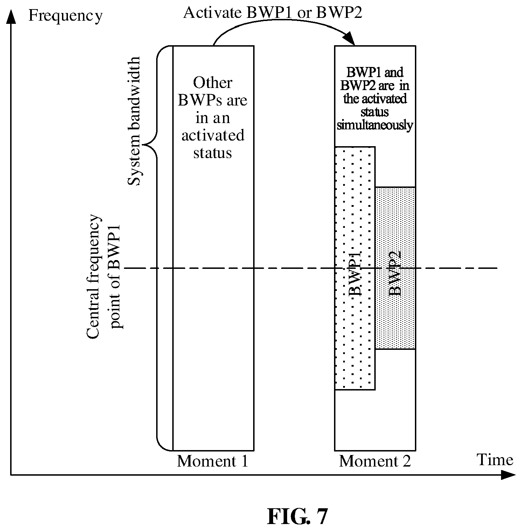

A second predetermined rule is shown in Table 5 and FIG. 7, that is, frequency domain ranges of BWP₂, ..., BWP_{N} are within a frequency domain range of BWP₁ in one BWP set. The first configuration information is configured with 4 DL BWPs. The frequency domain range of the DL BWP 2 is within in the frequency domain range of the DL BWP 1. The DL BWP1 and the DL BWP 2 are formed into a DL BWP set. The frequency domain range of the DL BWP 4 is within in the frequency domain range of the DL BWP 3. The DL BWP3 and the DL BWP 4 are formed into another DL BWP set. In a case that the first control information includes an ID of the DL BWP1 or the DL BWP 2, the DL BWP 1 and the DL BWP 2 are activated simultaneously. In a case that the first control information includes an ID of the DL BWP 3 or DL BWP 4, the DL BWP 3 and the DL BWP 4 are activated simultaneously.

**Table 5: frequency domain ranges of BWP₂, ..., BWP_{N} are within a frequency domain range of BWP₁ in a BWP set**

| **ID of DL BWP** | **Frequency domain position and bandwidth size** | **Parameter set** |
|---|---|---|
| DL BWP 1 | Frequency domain position 1 and bandwidth size 1 | Parameter set 1 |
| DL BWP 2 | Frequency domain position 2 and bandwidth size 2 (The frequency domain range is within the range of the DL BWP 1) | Parameter set 2 |
| DL BWP 3 | Frequency domain position 3 and bandwidth size 3 | Parameter set 1 |
| DL BWP 4 | Frequency domain position 4 and bandwidth size 4 (The frequency domain range is within the range of the DL BWP 3) | Parameter set 2 |

It is to be understood that the configuration and activation methods of the UL BWP set is the same as those of the DL BWP set.

### Example 5: simultaneous deactivation of BWPs in a BWP set

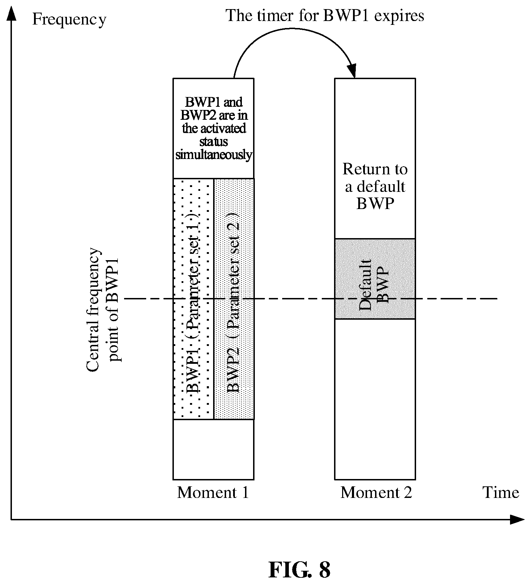

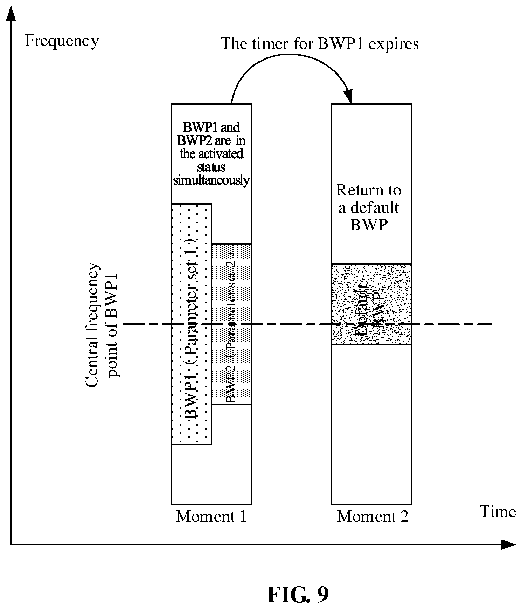

As shown in FIG. 8 and FIG. 9, when the DL BWP1 and the DL BWP2 are in an activated status simultaneously and the DL BWP1 and the DL BWP2 have the same frequency domain positions and bandwidth sizes or the frequency domain range of the DL BWP2 is within the frequency domain range of the DL BWP1, and after a timer1 for the DL BWP1 expires, the DL BWP1 and the DL BWP2 are deactivated simultaneously.

It is to be understood that the configuration and activation methods of the UL BWP set is the same as those of the DL BWP set.

### Example 6: respective deactivation of BWPs in a BWP set

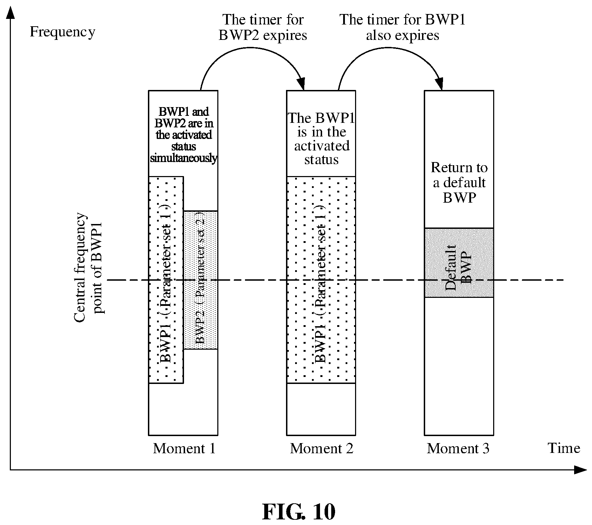

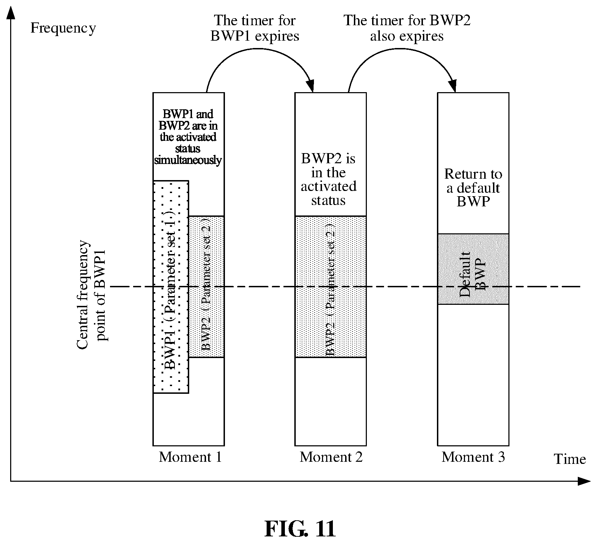

As shown in FIG. 10 and FIG. 11, when the DL BWP1 and the DL BWP2 are in an activated status simultaneously and when a timer1 for the DL BWP1 expires, the DL BWP1 may be deactivated and the DL BWP2 may be still in the activated status. When a timer2 for the DL BWP2 expires, the DL BWP2 may be deactivated and the DL BWP1 may be still in the activated status.

It is to be understood that the configuration and activation methods of the UL BWP set is the same as those of the DL BWP set.

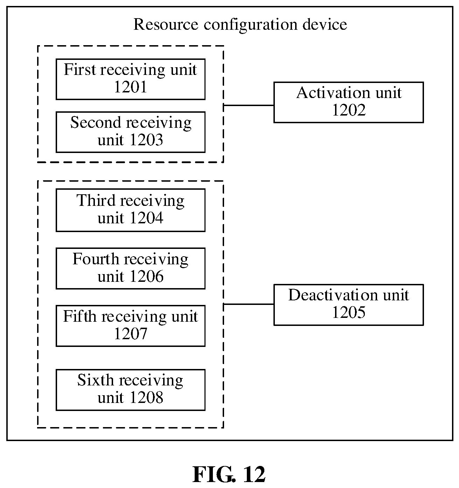

FIG. 12 is a first structural diagram of a resource configuration device according to embodiments of the disclosure. As shown in FIG. 12, the resource configuration device includes a first receiving unit 1201 and an activation unit 1202.

The first receiving unit 1201 is configured to receive first control information from a network device, the first control information including first indication information, and the first indication information being configured to determine at least two DL BWPs to be activated or at least two UL BWPs to be activated.

The activation unit 1202 is configured to activate the at least two DL BWPs or the at least two UL BWPs according to the first control information.

In the embodiments, the device further includes a second receiving unit 1203.

The second receiving unit 1203 is configured to receive first configuration information from the network device, the first configuration information including configuration information of at least one DL BWP set or at least one UL BWP set, the DL BWP set including a plurality of DL BWPs, and the UL BWP set including a plurality of UL BWPs.

In the embodiments, the activation unit 1202 is configured to enable, in response to that the first indication information is indication information of a first BWP set, a terminal to activate each BWP in the first BWP set.

In a case that the first BWP set is the DL BWP set, each BWP in the first BWP set is the DL BWP; or in a case that the first BWP set is the UL BWP set, each BWP in the first BWP set is the UL BWP.

In an implementation, the device further includes a third receiving unit 1204 and a deactivation unit 1205.

The third receiving unit 1204 is configured to receive second configuration information from the network device, the second configuration information including first duration information corresponding to the first BWP set.

The deactivation unit 1205 is configured to deactivate each BWP in the first BWP set in response to that an activated duration of each BWP in the first BWP set reaches a first duration.

In an implementation, the device may further include a fourth receiving unit 1206 and the deactivation unit 1205.

The fourth receiving unit 1206 is configured to receive third configuration information from the network device, the third configuration information including second duration information corresponding to a first BWP in the first BWP set.

The deactivation unit 1205 is configured to deactivate the first BWP in response to that an activated duration of the first BWP reaches a second duration.

In an implementation, the activation unit 1202 is further configured to activate a default BWP in response to that each BWP in the first BWP set is deactivated.

In an implementation, the activation unit 1202 is configured to activate each BWP in the second BWP set in response to determining, based on the first configuration information, that each BWP in a second BWP set meets a predetermined rule and the first indication information is indication information of a second BWP in the second BWP set.

In a case that the second BWP set is the DL BWP set, each BWP in the second BWP set may be the DL BWP; or in a case that the second BWP set is the UL BWP set, each BWP in the second BWP set may be the UL BWP.

In an implementation, the activation unit 1202 is configured to activate each BWP in the second BWP set in response to determining, based on the first configuration information, that each BWP in a second BWP set meets a predetermined rule and the first indication information is indication information of a second BWP in the second BWP set.

In a case that the second BWP set is the DL BWP set, the second BWP may be the DL BWP; or in a case that the second BWP set is the UL BWP set, the second BWP may be the UL BWP.

In an implementation, each BWP in the second BWP set meets the predetermined rule, which may include the following situations:
each BWP in the second BWP set is consistent in frequency domain position and bandwidth size; or
a frequency domain range of each BWP, other than the second BWP, in the second BWP set is within a frequency domain range of the second BWP; or
an RF bandwidth capacity of the terminal can simultaneously cover a frequency domain range of each BWP in the second BWP set.

In an implementation, the device may further include a fifth receiving unit 1207 and the deactivation unit 1205.

The fifth receiving unit 1207 is configured to receive fourth configuration information from the network device, the fourth configuration information including third duration information corresponding to the second BWP.

The deactivation unit 1205 is configured to deactivate each BWP in the second BWP set in response to that an activated duration of the second BWP reaches a third duration.

In an implementation, the device may further include a sixth receiving unit 1208 and the deactivation unit 1205.

The sixth receiving unit 1208 is configured to receive fifth configuration information from the network device, the fifth configuration information including fourth duration information corresponding to a third BWP in the second BWP set.

The deactivation unit 1205 is configured to deactivate the third BWP in response to that an activated duration of the third BWP reaches a fourth duration, the third BWP being different from the second BWP.

In an implementation, the activation unit 1202 is further configured to activate a default BWP in response to that each BWP in the second BWP set is deactivated.

Those skilled in the art should know that functions realized by each unit in the resource configuration device shown in FIG. 12 may be understood with reference to related descriptions about the resource configuration method. The functions of each unit in the resource configuration device shown in FIG. 12 may be realized through a program running in a processor, and may also be realized through a specific logical circuit.

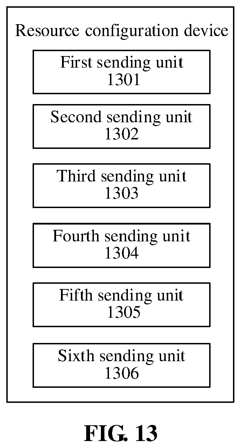

FIG. 13 is a second structural diagram of a resource configuration device according to embodiments of the disclosure. As shown in FIG. 13, the resource configuration device includes a first sending unit 1301.

The first sending unit 1301 is configured to send first control information to a terminal, the first control information including first indication information, and the first indication information being configured to determine at least two DL BWPs to be activated or at least two UL BWPs to be activated to enable the terminal to activate the at least two DL BWPs or the at least two UL BWPs according to the first control information.

In the embodiments, the device further includes a second sending unit 1302.

The second sending unit 1302 is configured to send first configuration information to the terminal, the first configuration information including configuration information of at least one DL BWP set or at least one UL BWP set, the DL BWP set including a plurality of DL BWPs, and the UL BWP set including a plurality of UL BWPs.

In the embodiments, in response to that the first indication information is indication information of a first BWP set, the first indication information is configured to enable the terminal to activate each BWP in the first BWP set.

In a case that the first BWP set is the DL BWP set, each BWP in the first BWP set is the DL BWP; or in a case that the first BWP set is the UL BWP set, each BWP in the first BWP set is the UL BWP.

In the embodiments, the device further includes a third sending unit 1303.

The third sending unit 1303 is configured to send second configuration information to the terminal, the second configuration information including first duration information corresponding to the first BWP set.

The first duration information is configured to enable, in response to that an activated duration of each BWP in the first BWP set reaches a first duration, the terminal to deactivate each BWP in the first BWP set.

In an implementation, the device may further include a fourth sending unit 1304.

The fourth sending unit 1304 is configured to send third configuration information to the terminal, the third configuration information including second duration information corresponding to a first BWP in the first BWP set.

The second duration information is configured to enable, in response to that an activated duration of the first BWP reaches a second duration, the terminal to deactivate the first BWP.

In an implementation, in response to it is determined, based on the first configuration information, that each BWP in a second BWP set meets a predetermined rule and the first indication information is indication information of a second BWP in the second BWP set, the first indication information is configured to enable the terminal to activate each BWP in the second BWP set.

In a case that the second BWP set is the DL BWP set, each BWP in the second BWP set may be the DL BWP; or in a case that the second BWP set is the UL BWP set, each BWP in the second BWP set may be the UL BWP.

In an implementation, in response to it is determined, based on the first configuration information, that each BWP in the second BWP set does not meet the predetermined rule and the first indication information is the indication information of the second BWP in the second BWP set, the first indication information is configured to enable the terminal to activate the second BWP.

In a case that the second BWP set is the DL BWP set, the second BWP may be the DL BWP; or in a case that the second BWP set is the UL BWP set, the second BWP may be the UL BWP.

In an implementation, each BWP in the second BWP set meets the predetermined rule, which may include the following situations:
each BWP in the second BWP set is consistent in frequency domain position and bandwidth size; or
a frequency domain range of each BWP, other than the second BWP, in the second BWP set is within a frequency domain range of the second BWP; or
an RF bandwidth capacity of the terminal can simultaneously cover a frequency domain range of each BWP in the second BWP set.

In an implementation, the device may further include a fifth sending unit 1305.

The fifth sending unit 1305 is configured to send fourth configuration information to the terminal, the fourth configuration information including third duration information corresponding to the second BWP.

The third duration information is configured to enable, in response to that an activated duration of the second BWP reaches a third duration, the terminal to deactivate each BWP in the second BWP set.

In an implementation, the device may further include a sixth sending unit 1306.

The sixth sending unit 1306 is configured to send fifth configuration information to the terminal, the fifth configuration information including fourth duration information corresponding to a third BWP in the second BWP set.

The fourth duration information is configured to enable, in response to that an activated duration of the third BWP reaches a fourth duration, the terminal to deactivate the third BWP, the third BWP being different from the second BWP.

Those skilled in the art should know that functions realized by each unit in the resource configuration device shown in FIG. 13 may be understood with reference to related descriptions about the resource configuration method. The functions of each unit in the resource configuration device shown in FIG. 13 may be realized through a program running in a processor, and may also be realized through a specific logical circuit.

When being implemented by software functional modules and sold or used as an independent product, the resource configuration devices of the embodiments of the disclosure may also be stored in a computer-readable storage medium. Based on such an understanding, the technical solutions of the embodiments of the disclosure substantially or the parts making contributions to the conventional art may be embodied as a software product. The computer software product is stored in a storage medium, including a plurality of instructions configured to enable a computer device (which may be a personal computer, a server, a network device or the like) to execute all or part of the method in each embodiment of the disclosure. The storage medium may include various media capable of storing program codes, such as a U disk, a mobile hard disk, a Read Only Memory (ROM), a magnetic disk or an optical disk. Therefore, the embodiments of the disclosure are not limited to any specific hardware and software combination.

Correspondingly, the embodiments of the disclosure further provide a computer storage medium, which has computer executable instructions stored thereon. The computer executable instructions may implement, when being executed by a processor, the above-mentioned resource configuration methods.

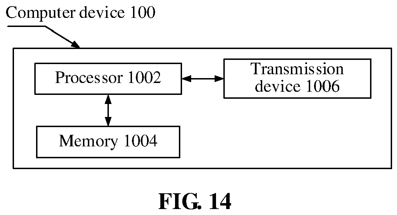

FIG. 14 is a structural diagram of a computer device according to the disclosure. The computer device may be a terminal or may also be a network device. As shown in FIG. 14, the computer device 100 may include one or more (only one is illustrated in the figure) processors 1002 (the processor 1002 may include, but not limited to, a processing device such as a Micro Control Unit (MCU) or a Field Programmable Gate Array (FPGA)), a memory 1004 configured to store data and a transmission device 1006 configured for a communication function. Those of ordinary skill in the art should know that the structure shown in FIG. 14 is only schematic and not intended to limit the structure of the electronic device. For example, the computer device 100 may further include components more or fewer than the components shown in FIG. 14 or has a configuration different from that shown in FIG. 14.

The memory 1004 may be configured to store a software program of application software and a module, for example, a program instruction/module corresponding to a method in the embodiments of the disclosure. The processor 1002 runs the software program and module stored in the memory 1004, thereby executing various functional applications and data processing, namely implementing the above-mentioned method. The memory 1004 may be a high-speed random access memory or may be a nonvolatile memory, for example, one or more magnetic storage devices, flash memories or other nonvolatile solid-state memories. In some examples, the memory 1004 may further include a memory arranged remotely relative to the processor 1002 and the remote memory may be connected to the computer device 100 through a network. An example of the network includes, but not limited to, the Internet, an intranet, a local area network, a mobile communication network and a combination thereof.

The transmission device 1006 is configured to receive or send data through a network. A specific example of the network may include a wireless network provided by a communication provider of the computer device 100. In an example, the transmission device 1006 includes a Network Interface Controller (NIC), which may be connected with another network device through a base station, thereby communicating with the Internet. In an example, the transmission device 1006 may be a Radio Frequency (RF) module, configured to communicate with the Internet in a wireless manner.

The technical solutions in the embodiments of the disclosure may be freely combined without conflicts.

In some embodiments provided by the disclosure, it is to be understood that the disclosed method and intelligent device may be implemented in another manner. The device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part of all of the units may be selected according to a practical requirement to achieve the purposes of the solutions of the embodiments.

In addition, each functional unit in each embodiment of the disclosure may be integrated into a second processing unit, each unit may also serve as an independent unit and two or more than two units may also be integrated into a unit. The integrated unit may be implemented in a hardware form and may also be implemented in form of hardware and software functional unit.

The above is only the specific implementation of the disclosure and not intended to limit the scope of protection of the disclosure. The protection scope of the present application shall be subject to the protection scope of the claims.

## Claims

1. A method for resource configuration, comprising:
receiving, by a terminal, first configuration information from a network device, wherein the first configuration information comprises configuration information of at least one downlink, DL, band width part, BWP, set or at least one uplink, UL, BWP set, the DL BWP set comprises a plurality of DL BWPs, and the UL BWP set comprises a plurality of UL BWPs;
receiving (201), by the terminal, first control information from the network device, wherein the first control information comprises first indication information, and the first indication information is configured to determine at least two DL BWPs, to be activated or at least two UL BWPs to be activated;
activating (202), by the terminal, the at least two DL BWPs or the at least two UL BWPs according to the first control information, **characterized by** comprising:
in response to the first indication information being indication information of a first BWP set, activating, by the terminal, each BWP in the first BWP set simultaneously,
wherein in a case that the first BWP set is the DL BWP set, each BWP in the first BWP set is the DL BWP, or in a case that the first BWP set is the UL BWP set, each BWP in the first BWP set is the UL BWP;
receiving, by the terminal, second configuration information from the network device, wherein the second configuration information comprises first duration information corresponding to the first BWP set; and
deactivating each BWP in the first BWP set simultaneously in response to an activated duration of each BWP in the first BWP set reaching the first duration.

2. The method of claim 1, wherein the method further comprises:
receiving, by the terminal, third configuration information from the network device, wherein the third configuration information comprises second duration information corresponding to a first BWP in the first BWP set; and
deactivating the first BWP in response to an activated duration of the first BWP reaching the second duration.

3. The method of claim 1 or 2, further comprising:
activating a default BWP in response to each BWP in the first BWP set being deactivated.

4. A method for resource configuration, comprising:
sending, by a network device, first configuration information to a terminal, wherein the first configuration information comprises configuration information of at least one downlink, DL, band width part, BWP, set or at least one uplink, UL, BWP set, the DL BWP set comprises a plurality of DL BWPs, and the UL BWP set comprises a plurality of UL BWPs;
sending (301), by the network device, first control information to the terminal, wherein the first control information comprises first indication information, and the first indication information is configured to determine at least two DL BWPs to be activated or at least two UL BWPs to be activated to enable the terminal to activate the at least two DL BWPs or the at least two UL BWPs according to the first control information;
**characterized in that** in response to the first indication information being indication information of a first BWP set, the first indication information is configured to instruct the terminal to activate each BWP in the first BWP set simultaneously, in a case that the first BWP set is the DL BWP set, each BWP in the first BWP set is the DL BWP, or in a case that the first BWP set is the UL BWP set, each BWP in the first BWP set is the UL BWP; and
sending, by the network device, second configuration information to the terminal, wherein the second configuration information comprises first duration information corresponding to the first BWP set, and the first duration information is configured to instruct the terminal to deactivate each BWP in the first BWP set simultaneously in response to an activated duration of each BWP in the first BWP set reaching the first duration.

5. The method of claim 4, wherein the method further comprises:
sending, by the network device, third configuration information to the terminal,
wherein the third configuration information comprises second duration information corresponding to a first BWP in the first BWP set; and the second duration information is configured to instruct the terminal to deactivate the first BWP in response to an activated duration of the first BWP reaching the second duration.

6. A device for resource configuration, comprising:
a first receiving unit (1201), configured to receive first control information from a network device, wherein the first control information comprises first indication information, and the first indication information is configured to determine at least two downlink, DL, band width parts, BWPs, to be activated or at least two uplink, UL, BWPs to be activated;
an activation unit (1202), configured to activate the at least two DL BWPs or the at least two UL BWPs according to the first control information;
a second receiving unit (1203), configured to receive first configuration information from the network device, wherein the first configuration information comprises configuration information of at least one DL BWP set or at least one UL BWP set, the DL BWP set comprising a plurality of DL BWPs, and the UL BWP set comprising a plurality of UL BWPs;
**characterized in that** the activation unit (1202) is further configured to activate, in response to the first indication information being indication information of a first BWP set, each BWP in the first BWP set simultaneously, wherein in a case that the first BWP set is the DL BWP set, each BWP in the first BWP set is the DL BWP, or in a case that the first BWP set is the UL BWP set, each BWP in the first BWP set is the UL BWP;
the device further comprises:
a third receiving unit (1204), configured to receive second configuration information from the network device, wherein the second configuration information comprises first duration information corresponding to the first BWP set; and
a deactivation unit (1205), configured to deactivate each BWP in the first BWP set simultaneously in response to an activated duration of each BWP in the first BWP set reaching the first duration.

7. The device of claim 6, wherein
the activation unit(1202) is further configured to:
activate each BWP in a second BWP set in response to determining, based on the first configuration information, that each BWP in the second BWP set meets a predetermined rule and the first indication information being indication information of a second BWP in the second BWP set, wherein in a case that the second BWP set is the DL BWP set, the each BWP in the second BWP set is the DL BWP; or in a case that the second BWP set is the UL BWP set, the each BWP in the second BWP set is the UL BWP.

8. The device of claim 6, wherein the activation unit (1202) is further configured to:
activate a second BWP in response to determining, based on the first configuration information, that each BWP in a second BWP set does not meet a predetermined rule and the first indication information being indication information of the second BWP in the second BWP set, wherein in a case that the second BWP set is the DL BWP set, the second BWP is the DL BWP; or in a case that the second BWP set is the UL BWP set, the second BWP is the UL BWP, wherein the each BWP in the second BWP set meets the predetermined rule, which comprises:
the each BWP in the second BWP set is consistent in frequency domain position and bandwidth size; or
a frequency domain range of the each BWP, other than the second BWP, in the second BWP set is within a frequency domain range of the second BWP; or
a radio frequency, RF, bandwidth capacity of the terminal is capable of simultaneously covering a frequency domain range of the each BWP in the second BWP set.

9. The device of claim 7 or 8, further comprising:
a fifth receiving unit (1207), configured to receive fourth configuration information from the network device, wherein the fourth configuration information comprises third duration information corresponding to the second BWP; wherein
the deactivation unit (1205) is further configured to deactivate the each BWP in the second BWP set in response to an activated duration of the second BWP reaching the third duration;
and/or,
the device further comprising:
a sixth receiving unit (1208), configured to receive fifth configuration information from the network device, wherein the fifth configuration information comprises fourth duration information corresponding to a third BWP in the second BWP set; wherein
the deactivation unit (1205) is further configured to deactivate the third BWP in response to an activated duration of the third BWP reaching the fourth duration, the third BWP being different from the second BWP.

10. A device for resource configuration, comprising:
a first sending unit(1301), configured to send first control information to a terminal, wherein the first control information comprises first indication information, and the first indication information is configured to determine at least two downlink, DL, band width parts, BWPs, to be activated or at least two uplink, UL, BWPs to be activated to enable the terminal to activate the at least two DL BWPs or the at least two UL BWPs according to the first control information;
a second sending unit (1302), configured to send first configuration information to the terminal, wherein the first configuration information comprises configuration information of at least one DL BWP set or at least one UL BWP set, the DL BWP set comprises a plurality of DL BWPs, and the UL BWP set comprises a plurality of UL BWPs;
**characterized in that** in response to the first indication information being indication information of a first BWP set, the first indication information is configured to instruct the terminal to activate each BWP in the first BWP set simultaneously, wherein in a case that the first BWP set is the DL BWP set, each BWP in the first BWP set is the DL BWP, or in a case that the first BWP set is the UL BWP set, each BWP in the first BWP set is the UL BWP;
the device further comprises:
a third sending unit (1303), configured to send second configuration information to the terminal, wherein the second configuration information comprises first duration information corresponding to the first BWP set; and the first duration information is configured to instruct the terminal to deactivate each BWP in the first BWP set simultaneously in response to an activated duration of each BWP in the first BWP set reaching the first duration.

11. A computer storage medium, having computer executable instructions stored thereon for execution by a processor to implement operations of the method according to any one of claims 1 to 3, or operations of the method according to any one of claim 4 or 5.

## Patentansprüche

1. Verfahren zur Ressourcenkonfiguration, umfassend:
Empfangen, durch ein Endgerät, erster Konfigurationsinformationen von einer Netzwerkvorrichtung, wobei die ersten Konfigurationsinformationen Konfigurationsinformationen von mindestens einem Downlink-Bandbreitenteil- bzw. DL-BWP-Satz oder mindestens einem Uplink- bzw. UL-BWP-Satz umfassen, wobei der DL-BWP-Satz eine Vielzahl von DL-BWPs umfasst und der UL-BWP-Satz eine Vielzahl von UL-BWPs umfasst;
Empfangen (201), durch das Endgerät, erster Steuerinformationen von der Netzwerkvorrichtung, wobei die ersten Steuerinformationen erste Indikationsinformationen umfassen und die ersten Indikationsinformationen dazu ausgelegt sind, mindestens zwei zu aktivierende DL-BWPs oder mindestens zwei zu aktivierende UL-BWPs zu bestimmen;
Aktivieren (202), durch das Endgerät, der mindestens zwei DL-BWPs oder der mindestens zwei UL-BWPs gemäß den ersten Steuerinformationen, **dadurch gekennzeichnet, dass** es umfasst:
als Reaktion darauf, dass die ersten Indikationsinformationen Indikationsinformationen eines ersten BWP-Satzes sind, gleichzeitiges Aktivieren, durch das Endgerät, jedes BWP im ersten BWP-Satz,
wobei, falls der erste BWP-Satz der DL-BWP-Satz ist, jeder BWP im ersten BWP-Satz der DL-BWP ist, oder, falls der erste BWP-Satz der UL-BWP-Satz ist, jeder BWP im ersten BWP-Satz der UL-BWP ist;
Empfangen, durch das Endgerät, zweiter Konfigurationsinformationen von der Netzwerkvorrichtung, wobei die zweiten Konfigurationsinformationen erste Dauerinformationen entsprechend dem ersten BWP-Satz umfassen; und
gleichzeitiges Deaktivieren jedes BWP im ersten BWP-Satz als Reaktion darauf, dass eine aktivierte Dauer jedes BWP im ersten BWP-Satz die erste Dauer erreicht.

2. Verfahren nach Anspruch 1, wobei das Verfahren ferner umfasst:
Empfangen, durch das Endgerät, dritter Konfigurationsinformationen von der Netzwerkvorrichtung, wobei die dritten Konfigurationsinformationen zweite Dauerinformationen entsprechend einem ersten BWP im ersten BWP-Satz umfassen; und
Deaktivieren des ersten BWP als Reaktion darauf, dass eine aktivierte Dauer des ersten BWP die zweite Dauer erreicht.

3. Verfahren nach Anspruch 1 oder 2, ferner umfassend: Aktivieren eines Standard-BWP als Reaktion darauf, dass jeder BWP im ersten BWP-Satz deaktiviert wird.

4. Verfahren zur Ressourcenkonfiguration, umfassend:
Senden, durch eine Netzwerkvorrichtung, erster Konfigurationsinformationen an ein Endgerät, wobei die ersten Konfigurationsinformationen Konfigurationsinformationen mindestens eines Downlink-Bandbreitenteil- bzw. DL-BWP-Satzes oder mindestens eines Uplink- bzw. UL-BWP-Satzes umfassen, wobei der DL-BWP-Satz eine Vielzahl von DL-BWPs umfasst und der UL-BWP-Satz eine Vielzahl von UL-BWPs umfasst;
Senden (301), durch die Netzwerkvorrichtung, erster Steuerinformationen an das Endgerät, wobei die ersten Steuerinformationen erste Indikationsinformationen umfassen, und die ersten Indikationsinformationen dazu ausgelegt sind, mindestens zwei zu aktivierende DL-BWPs oder mindestens zwei zu aktivierende UL-BWPs zu bestimmen, um dem Endgerät zu ermöglichen, die mindestens zwei DL-BWPs oder die mindestens zwei UL-BWPs gemäß den ersten Steuerinformationen zu aktivieren;
**dadurch gekennzeichnet, dass** als Reaktion darauf, dass die ersten Indikationsinformationen Indikationsinformationen eines ersten BWP-Satzes sind, die ersten Indikationsinformationen dazu ausgelegt sind, das Endgerät anzuweisen, jeden BWP im ersten BWP-Satz gleichzeitig zu aktivieren, falls der erste BWP-Satz der DL-BWP-Satz ist, wobei jeder BWP im ersten BWP-Satz der DL-BWP ist, oder, falls der erste BWP-Satz der UL-BWP-Satz ist, jeder BWP im ersten BWP-Satz der UL-BWP ist; und
Senden, durch die Netzwerkvorrichtung, zweiter Konfigurationsinformationen an das Endgerät, wobei die zweiten Konfigurationsinformationen erste Dauerinformationen entsprechend dem ersten BWP-Satz umfassen, und die ersten Dauerinformationen dazu ausgelegt sind, das Endgerät anzuweisen, jeden BWP im ersten BWP-Satz gleichzeitig als Reaktion darauf zu deaktivieren, dass eine aktivierte Dauer jedes BWP im ersten BWP-Satz die erste Dauer erreicht.

5. Verfahren nach Anspruch 4, wobei das Verfahren ferner umfasst:
Senden, durch die Netzwerkvorrichtung, dritter Konfigurationsinformationen an das Endgerät,
wobei die dritten Konfigurationsinformationen zweite Dauerinformationen entsprechend einem ersten BWP im ersten BWP-Satz umfassen; und die zweiten Dauerinformationen dazu ausgelegt sind, das Endgerät anzuweisen, den ersten BWP als Reaktion darauf zu deaktivieren, dass eine aktivierte Dauer des ersten BWP die zweite Dauer erreicht.

6. Vorrichtung zur Ressourcenkonfiguration, umfassend:
eine erste Empfangseinheit (1201), die ausgelegt ist zum Empfangen erster Steuerinformationen von einer Netzwerkvorrichtung, wobei die ersten Steuerinformationen erste Indikationsinformationen umfassen, und die ersten Indikationsinformationen dazu ausgelegt sind, mindestens zwei zu aktivierende Downlink-Bandbreitenteile bzw. DL-BWPs oder mindestens zwei zu aktivierende Uplink- bzw. UL-BWPs zu bestimmen;
eine Aktivierungseinheit (1202), die ausgelegt ist zum Aktivieren der mindestens zwei DL-BWPs oder der mindestens zwei UL-BWPs gemäß den ersten Steuerinformationen;
eine zweite Empfangseinheit (1203), die ausgelegt ist zum Empfangen erster Konfigurationsinformationen von der Netzwerkvorrichtung, wobei die ersten Konfigurationsinformationen Konfigurationsinformationen von mindestens einem DL-BWP-Satz oder mindestens einem UL-BWP-Satz umfassen, wobei der DL-BWP-Satz eine Vielzahl von DL-BWPs umfasst und der UL-BWP-Satz eine Vielzahl von UL-BWPs umfasst;
**dadurch gekennzeichnet, dass** die Aktivierungseinheit (1202) ferner ausgelegt ist zum gleichzeitigen Aktivieren, als Reaktion darauf, dass die ersten Indikationsinformationen Indikationsinformationen eines ersten BWP-Satzes sind, jedes BWP im ersten BWP-Satz, wobei, falls der erste BWP-Satz der DL-BWP-Satz ist, jeder BWP im ersten BWP-Satz der DL-BWP ist, oder, falls der erste BWP-Satz der UL-BWP-Satz ist, jeder BWP im ersten BWP-Satz der UL-BWP ist;
wobei die Vorrichtung ferner umfasst:
eine dritte Empfangseinheit (1204), die ausgelegt ist zum Empfangen zweiter Konfigurationsinformationen von der Netzwerkvorrichtung, wobei die zweiten Konfigurationsinformationen erste Dauerinformationen entsprechend dem ersten BWP-Satz umfassen; und
eine Deaktivierungseinheit (1205), die ausgelegt ist zum gleichzeitigen Deaktivieren jedes BWP im ersten BWP-Satz als Reaktion darauf, dass eine aktivierte Dauer jedes BWP im ersten BWP-Satz die erste Dauer erreicht.

7. Vorrichtung nach Anspruch 6, wobei
die Aktivierungseinheit (1202) ferner ausgelegt ist zum: Aktivieren jedes BWP in einem zweiten BWP-Satz als Reaktion auf das Bestimmen, basierend auf den ersten Konfigurationsinformationen, dass jeder BWP im zweiten BWP-Satz eine vorbestimmte Regel erfüllt und die ersten Indikationsinformationen Indikationsinformationen eines zweiten BWP im zweiten BWP-Satz sind, wobei, falls der zweite BWP-Satz der DL-BWP-Satz ist, jeder BWP im zweiten BWP-Satz der DL-BWP ist; oder, falls der zweite BWP-Satz der UL-BWP-Satz ist, jeder BWP im zweiten BWP-Satz der UL-BWP ist.

8. Vorrichtung nach Anspruch 6, wobei die Aktivierungseinheit (1202) ferner ausgelegt ist zum:
Aktivieren eines zweiten BWP als Reaktion auf das Bestimmen, basierend auf den ersten Konfigurationsinformationen, dass jeder BWP in einem zweiten BWP-Satz nicht eine vorbestimmte Regel erfüllt und die ersten Indikationsinformationen Indikationsinformationen des zweiten BWP im zweiten BWP-Satz sind, wobei, falls der zweite BWP-Satz der DL-BWP-Satz ist, der zweite BWP der DL-BWP ist; oder, falls der zweite BWP-Satz der UL-BWP-Satz ist, der zweite BWP der UL-BWP ist, wobei jeder BWP im zweiten BWP-Satz die vorbestimmte Regel erfüllt, die umfasst:
jeder BWP im zweiten BWP-Satz ist in Frequenzdomänenposition und Bandbreitengröße konsistent; oder
ein Frequenzdomänenbereich jedes BWP, außer dem zweiten BWP, im zweiten BWP-Satz liegt innerhalb eines Frequenzdomänenbereich des zweiten BWP; oder
eine Funkfrequenz- bzw. RF-Bandbreitenkapazität des Endgeräts ist in der Lage, gleichzeitig einen Frequenzdomänenbereich jedes BWP im zweiten BWP-Satz abzudecken.

9. Vorrichtung nach Anspruch 7 oder 8, ferner umfassend:
eine fünfte Empfangseinheit (1207), die ausgelegt ist zum Empfangen vierter Konfigurationsinformationen von der Netzwerkvorrichtung, wobei die vierten Konfigurationsinformationen dritte Dauerinformationen entsprechend dem zweiten BWP umfassen; wobei
die Deaktivierungseinheit (1205) ferner ausgelegt ist zum Deaktivieren jedes BWP im zweiten BWP-Satz als Reaktion darauf, dass eine aktivierte Dauer des zweiten BWP die dritte Dauer erreicht;
und/oder
wobei die Vorrichtung ferner umfasst:
eine sechste Empfangseinheit (1208), die ausgelegt ist zum Empfangen fünfter Konfigurationsinformationen von der Netzwerkvorrichtung, wobei die fünften Konfigurationsinformationen vierte Dauerinformationen entsprechend einem dritten BWP im zweiten BWP-Satz umfassen; wobei
die Deaktivierungseinheit (1205) ferner ausgelegt ist zum Deaktivieren des dritten BWP als Reaktion darauf, dass eine aktivierte Dauer des dritten BWP die vierte Dauer erreicht, wobei sich der dritte BWP vom zweiten BWP unterscheidet.

10. Vorrichtung zur Ressourcenkonfiguration, umfassend: eine erste Sendeeinheit (1301), die ausgelegt ist zum Senden erster Steuerinformationen an ein Endgerät, wobei die ersten Steuerinformationen erste Indikationsinformationen umfassen, und die ersten Indikationsinformationen dazu ausgelegt sind, mindestens zwei zu aktivierende Downlink-Bandbreitenteile bzw. DL-BWPs oder mindestens zwei zu aktivierende Uplink- bzw. UL-BWPs zu bestimmen, um dem Endgerät zu ermöglichen, die mindestens zwei DL-BWPs oder die mindestens zwei UL-BWPs gemäß den ersten Steuerinformationen zu aktivieren;
eine zweite Sendeeinheit (1302), die ausgelegt ist zum Senden erster Konfigurationsinformationen an das Endgerät, wobei die ersten Konfigurationsinformationen Konfigurationsinformationen von mindestens einem DL-BWP-Satz oder mindestens einem UL-BWP-Satz umfassen, wobei der DL-BWP-Satz eine Vielzahl von DL-BWPs umfasst und der UL-BWP-Satz eine Vielzahl von UL-BWPs umfasst;
**dadurch gekennzeichnet, dass** als Reaktion darauf, dass die ersten Indikationsinformationen Indikationsinformationen eines ersten BWP-Satzes sind, die ersten Indikationsinformationen dazu ausgelegt sind, das Endgerät anzuweisen, jeden BWP im ersten BWP-Satz gleichzeitig zu aktivieren, wobei, falls der erste BWP-Satz der DL-BWP-Satz ist, jeder BWP im ersten BWP-Satz der DL-BWP ist, oder, falls der erste BWP-Satz der UL-BWP-Satz ist, jeder BWP im ersten BWP-Satz der UL-BWP ist;
wobei die Vorrichtung ferner umfasst:
eine dritte Sendeeinheit (1303), die ausgelegt ist zum Senden zweiter Konfigurationsinformationen an das Endgerät, wobei die zweiten Konfigurationsinformationen erste Dauerinformationen entsprechend dem ersten BWP-Satz umfassen; und die ersten Dauerinformationen dazu ausgelegt sind, das Endgerät anzuweisen, jeden BWP im ersten BWP-Satz gleichzeitig zu deaktivieren, als Reaktion darauf, dass eine aktivierte Dauer jedes BWP im ersten BWP-Satz die erste Dauer erreicht.

11. Computerspeichermedium mit darauf gespeicherten computerausführbaren Anweisungen zur Ausführung durch einen Prozessor, um Operationen des Verfahrens nach einem der Ansprüche 1 bis 3 oder Operationen des Verfahrens nach einem der Ansprüche 4 oder 5 zu implementieren.

## Revendications

1. Procédé de configuration de ressources, comprenant les étapes suivantes :
recevoir, par un terminal, des premières informations de configuration en provenance d'un dispositif de réseau, où les premières informations de configuration comprennent des informations de configuration d'au moins un ensemble de largeurs de bande, BWP, de liaison descendante, DL, ou d'au moins un ensemble de largeurs de bande, BWP, de liaison montante, UL, l'ensemble de DL BWP comprenant une pluralité de BWP de DL, et l'ensemble de UL BWP comprenant une pluralité de BWP de UL ;
recevoir (201), par le terminal, des premières informations de commande provenant du dispositif de réseau, où les premières informations de commande comprennent des premières informations d'indication, et les premières informations d'indication sont configurées pour déterminer au moins deux DL BWP à activer ou au moins deux UL BWP à activer ;
activer (202), par le terminal, les au moins deux DL BWP ou les au moins deux UL BWP selon les premières informations de commande, le procédé étant **caractérisé en ce qu'**il comprend les étapes suivantes :
en réponse aux premières informations d'indication qui sont des informations d'indication d'un premier ensemble de BWP, activer simultanément, par le terminal, chaque BWP dans le premier ensemble de BWP,
où, dans le cas où le premier ensemble de BWP est l'ensemble de DL BWP, chaque BWP dans le premier ensemble de BWP est la DL BWP, ou dans le cas où le premier ensemble BWP est l'ensemble de UL BWP, chaque BWP dans le premier ensemble de BWP est la UL BWP ;
recevoir, par le terminal, des deuxièmes informations de configuration provenant du dispositif réseau, les deuxièmes informations de configuration comprenant des premières informations de durée correspondant au premier ensemble de BWP ; et
désactiver simultanément chaque BWP du premier ensemble de BWP en réponse au fait qu'une durée activée de chaque BWP du premier ensemble de BWP atteint la première durée.

2. Procédé selon la revendication 1, dans lequel le procédé comprend en outre les étapes suivantes :
recevoir, par le terminal, des troisièmes informations de configuration en provenance du dispositif réseau, où les troisièmes informations de configuration comprennent des deuxièmes informations de durée correspondant à une première BWP dans le premier ensemble de BWP ; et
désactiver la première BWP en réponse au fait qu'une durée activée de la première BWP atteint la deuxième durée.

3. Procédé selon la revendication 1 ou la revendication 2, comprenant en outre l'étape suivante :
activer une BWP par défaut en réponse à la désactivation de chaque BWP dans le premier ensemble de BWP.

4. Procédé de configuration de ressources, comprenant les étapes suivantes :
envoyer, par un dispositif de réseau, des premières informations de configuration à un terminal, où les premières informations de configuration comprennent des informations de configuration d'au moins un ensemble de largeurs de bande, BWP, de liaison descendante, DL, ou d'au moins un ensemble de BWP de liaison montante, UL, l'ensemble de DL BWP comprenant une pluralité de DL BWP, et l'ensemble de UL BWP comprenant une pluralité de UL BWP ;
envoyer (301), par le dispositif de réseau, des premières informations de commande au terminal, où les premières informations de commande comprennent des premières informations d'indication, et les premières informations d'indication sont configurées pour déterminer au moins deux DL BWP à activer ou au moins deux UL BWP à activer pour permettre au terminal d'activer les au moins deux DL BWP ou les au moins deux UL BWP selon les premières informations de commande ;
**caractérisé en ce que**, en réponse aux premières informations d'indication étant des informations d'indication d'un premier ensemble de BWP, les premières informations d'indication sont configurées pour donner pour instruction au terminal d'activer simultanément chaque BWP dans le premier ensemble de BWP, dans le cas où le premier ensemble de BWP est l'ensemble de DL BWP, chaque BWP dans le premier ensemble de BWP est la DL BWP, ou dans le cas où le premier ensemble de BWP est l'ensemble de UL BWP, chaque BWP du premier ensemble de BWP est la UL BWP ; et
envoyer, par le dispositif de réseau, des deuxièmes informations de configuration au terminal, où les deuxièmes informations de configuration comprennent des premières informations de durée correspondant au premier ensemble de BWP, et les premières informations de durée sont configurées pour donner pour instruction au terminal de désactiver simultanément chaque BWP du premier ensemble de BWP en réponse à une durée activée de chaque BWP du premier ensemble de BWP atteignant la première durée.

5. Procédé selon la revendication 4, dans lequel le procédé comprend en outre les étapes suivantes :
envoyer, par le dispositif de réseau, des troisièmes informations de configuration au terminal,
les troisièmes informations de configuration comprenant des deuxièmes informations de durée correspondant à une première BWP dans le premier ensemble de BWP ; et les deuxièmes informations de durée étant configurées pour donner pour instruction au terminal de désactiver la première BWP en réponse à une durée activée de la première BWP atteignant la deuxième durée.

6. Dispositif de configuration de ressources, comprenant :
une première unité de réception (1201), configurée pour recevoir des premières informations de commande en provenance d'un dispositif de réseau, où les premières informations de commande comprennent des premières informations d'indication, et les premières informations d'indication sont configurées pour déterminer au moins deux parties de largeur de bande, BWP, de liaison descendante, DL, à activer ou au moins deux BWP de liaison montante, UL, à activer ;
une unité d'activation (1202), configurée pour activer les au moins deux DL BWP ou les au moins deux UL BWP en fonction des premières informations de commande ;
une deuxième unité de réception (1203), configurée pour recevoir des premières informations de configuration en provenance du dispositif de réseau, où les premières informations de configuration comprennent des informations de configuration d'au moins un ensemble de DL BWP ou d'au moins un ensemble de UL BWP, l'ensemble de DL BWP comprenant une pluralité de DL BWP, et l'ensemble de UL BWP comprenant une pluralité de UL BWP ; **caractérisé en ce que** l'unité d'activation (1202) est en outre configurée pour activer, en réponse au fait que les premières informations d'indication sont des informations d'indication d'un premier ensemble de BWP, chaque BWP dans le premier ensemble de BWP, simultanément où, dans le cas où le premier ensemble de BWP est l'ensemble de DL BWP, chaque BWP dans le premier ensemble de BWP est la DL BWP ou, dans le cas où le premier ensemble BWP est l'ensemble de UL BWP, chaque BWP dans le premier ensemble de BWP est la UL BWP ;
le dispositif comprenant en outre :
une troisième unité de réception (1204), configurée pour recevoir des deuxièmes informations de configuration en provenance du dispositif de réseau, où les deuxièmes informations de configuration comprennent des premières informations de durée correspondant au premier ensemble de BWP ; et
une unité de désactivation (1205), configurée pour désactiver simultanément chaque BWP du premier ensemble de BWP en réponse à une durée activée de chaque BWP du premier ensemble de BWP atteignant la première durée.

7. Dispositif selon la revendication 6, dans lequel : l'unité d'activation (1202) est en outre configurée pour :
activer chaque BWP dans un deuxième ensemble de BWP en réponse à la détermination, sur la base des premières informations de configuration, que chaque BWP dans le deuxième ensemble de BWP satisfait à une règle prédéterminée et les premières informations d'indication étant des informations d'indication d'une deuxième BWP dans le deuxième ensemble de BWP où, dans le cas où le deuxième ensemble de BWP est l'ensemble de DL BWP, chaque BWP dans le deuxième ensemble de BWP est la DL BWP ; ou, dans le cas où le deuxième ensemble de BWP est l'ensemble de UL BWP, chaque BWP dans le deuxième ensemble de BWP est la UL BWP.

8. Dispositif selon la revendication 6, dans lequel l'unité d'activation (1202) est en outre configurée pour :
activer une deuxième BWP en réponse à la détermination, sur la base des premières informations de configuration, que chaque BWP d'un deuxième ensemble de BWP ne respecte pas une règle prédéterminée et que les premières informations d'indication sont des informations d'indication de la deuxième BWP dans le deuxième ensemble de BWP où, dans le cas où le deuxième ensemble de BWP est l'ensemble de DL BWP, la deuxième BWP est la DL BWP ; ou,
dans le cas où le deuxième ensemble de BWP est l'ensemble de UL BWP, la deuxième BWP est la UL BWP, où chaque BWP du deuxième ensemble de BWP respecte la règle prédéterminée, qui comprend que :
chaque BWP du deuxième ensemble de BWP est cohérent en termes de position du domaine de fréquence et de taille de bande passante ; ou
une plage du domaine de fréquence de chaque BWP, autre que la deuxième BWP, dans le deuxième ensemble de BWP, se situe dans une plage du domaine de fréquence de la deuxième BWP ; ou
une capacité de bande passante radiofréquence, RF, du terminal est capable de couvrir simultanément une plage du domaine de fréquence de chaque BWP dans le deuxième ensemble de BWP.

9. Dispositif selon la revendication 7 ou la revendication 8, comprenant en outre :
une cinquième unité de réception (1207), configurée pour recevoir des quatrièmes informations de configuration en provenance du dispositif de réseau, où les quatrièmes informations de configuration comprennent des troisièmes informations de durée correspondant à la deuxième BWP ; où
l'unité de désactivation (1205) est en outre configurée pour désactiver chaque BWP dans le deuxième ensemble de BWP en réponse au fait qu'une durée activée du deuxième BWP atteint la troisième durée ;
et/ou
le dispositif comprenant en outre :
une sixième unité de réception (1208), configurée pour recevoir des cinquièmes informations de configuration en provenance du dispositif de réseau, les cinquièmes informations de configuration comprenant des quatrièmes informations de durée correspondant à une troisième BWP dans le deuxième ensemble de BWP ; où
l'unité de désactivation (1205) est en outre configurée pour désactiver la troisième BWP en réponse à une durée activée de la troisième BWP atteignant la quatrième durée, la troisième BWP étant différente de la deuxième BWP.

10. Dispositif de configuration de ressources, comprenant :
une première unité d'envoi (1301), configurée pour envoyer des premières informations de commande à un terminal, où les premières informations de commande comprennent des premières informations d'indication, et les premières informations d'indication sont configurées pour déterminer au moins deux parties de largeur de bande, BWP, de liaison descendante, DL, à activer ou au moins deux BWP de liaison montante, UL, à activer pour permettre au terminal d'activer les au moins deux DL BWP ou les au moins deux UL BWP en fonction des premières informations de commande ;
une deuxième unité d'envoi (1302), configurée pour envoyer des premières informations de configuration au terminal, où les premières informations de configuration comprennent des informations de configuration d'au moins un ensemble de DL BWP ou d'au moins un ensemble de UL BWP, l'ensemble de DL BWP comprenant une pluralité de DL BWP, et l'ensemble de UL BWP comprenant une pluralité de UL BWP ;
**caractérisé en ce que**, en réponse au fait que les premières informations d'indication sont des informations d'indication d'un premier ensemble de BWP, les premières informations d'indication sont configurées pour donner pour instruction au terminal d'activer simultanément chaque BWP du premier ensemble de BWP où, dans le cas où le premier ensemble de BWP est l'ensemble de DL BWP, chaque BWP du premier ensemble de BWP est la DL BWP ou, dans le cas où le premier ensemble de BWP est l'ensemble de UL BWP, chaque BWP du premier ensemble de BWP est la UL BWP ;
le dispositif comprenant en outre :
une troisième unité d'envoi (1303), configurée pour envoyer des deuxièmes informations de configuration au terminal, où les deuxièmes informations de configuration comprennent des premières informations de durée correspondant au premier ensemble de BWP ; et les premières informations de durée sont configurées pour donner pour instruction au terminal de désactiver simultanément chaque BWP du premier ensemble de BWP en réponse à une durée activée de chaque BWP du premier ensemble de BWP atteignant la première durée.

11. Support de stockage informatique, sur lequel sont stockées des instructions informatiques exécutables par un processeur pour mettre en œuvre des opérations du procédé selon l'une quelconque des revendications 1 à 3, ou des opérations du procédé selon l'une quelconque des revendications 4 ou 5.
